# EUROPÄISCHE PATENTSCHRIFT

(11) **EP 0 439 738 B1**
(45) Veröffentlichungstag und Bekanntmachung des Hinweises auf die Patenterteilung: **16.02.1994**
(21) Anmeldenummer: 90123490.6
(22) Anmeldetag: 07.12.1990
(51) Int. Cl.: A62D 3/00, B01D 53/34

(54) **Verfahren zur Zersetzung organischer Halogenverbindungen**
Process for the decomposition of organic halogen compounds
Procédé pour la décomposition de composés halogénés organiques

(30) Priorität: 27.01.1990 DE 4002437
(43) Veröffentlichungstag der Anmeldung: 07.08.1991
(73) Patentinhaber: MAN Nutzfahrzeuge Aktiengesellschaft, 80976 München (DE)
(72) Erfinder: Jacob, Eberhard, Dr. Dipl.-Chem., W-8132 Tutzing (DE)

(56) Entgegenhaltungen:
- DE-A- 3 619 065
- DE-A- 3 841 847
- US-A- 4 435 379

## Beschreibung

Die Erfindung bezieht sich auf ein Verfahren zur Zersetzung organischer Halogenverbindungen in der Gasphase zu Kohlendioxid und Halogenwasserstoffen, indem ein Gasgemisch aus organischen Halogenverbindungen mit Wasserdampf und/oder Sauerstoff bei erhöhten Temperaturen (100° - 600°C) mit einer Katalysatormasse kontaktiert wird, die Titandioxid enthält.

In vielen Verbrennungs-/Verarbeitungsprozessen, bei denen organische Halogenverbindungen (HKW) enthalten sind, fallen Abfallstoffe, Abluft und Abgase an, die durch ihren HKW-Gehalt umweltschädlich sind.

Mit dem eingangs genannten aus DE-C-38 41 847 bekannten Verfahren, bei dem die Katalysatormasse aus sulfatiertem Titandioxid mit einem Sulfatgehalt von 0,05 - 10 Gewichtsprozent besteht, wird erreicht, daß nicht nur die leicht versetzbaren HKW, sondern auch fluorhaltige organische Halogenverbindungen zersetzt werden können. Es hat sich außerdem gezeigt, daß die Aktivität der Katalysatormasse in Gegenwart von HF, SO₂ und SO₃ erhalten bleibt. Nebenbestandteile der bekannten Katalysatormasse sind Kupferoxid und/oder Kupfersulfat.

Der vorliegenden Erfindung liegt die Aufgabe zugrunde, das Verfahren der eingangs genannten Art durch Alternativen zu erweitern.

Die Aufgabe wird erfindungsgemäß durch die Merkmale des Anspruchs 1 gelöst.

Die Verwendung einer Katalysatormasse, die ebenfalls Titandioxid als Hauptbestandteil enthält, jedoch als Nebenbestandteile mindestens eines der Oxide von Chrom, Mangan, Eisen, Kobalt und Nickel oder eine Kombination aus einem der vorgenannten Metalloxiden mit Kupferoxid enthält, wird die Aktivität der Katalysatormasse für die Hydrolyse und Oxidation bestimmter organischer Halogenverbindungen gegenüber der Verwendung von Kupferoxid erhöht.

Nachfolgend werden Beispiele zur Herstellung von Katalysatormassen beschrieben, die zur Durchführung des erfindungsgemäßen Verfahrens verwendbar sind.

### Beispiel 1

Titandioxid-Pellets mit einem Reinheitsgrad von 98% und einem Sulfatgehalt von 0,5%, einem Durchmessser von 3 - 5 mm und einer spezifischen Oberfläche von 70 - 80 m²/g werden mit einer wäßrigen, schwach salpetersauren Lösung von Chrom(III)nitrat getränkt, die soviel Chrom enthält, daß der fertige Katalysator a) 2% Chrom und b) 8% Chrom enthält.

### Beispiel 2

Titandioxid-Pellets mit einem Reinheitsgrad von 98% und einem Sulfatgehalt von 0,5%, einem Durchmesser von 3 - 5 mm und einer spezifischen Oberfläche von 70 - 80 m²/g werden mit einer wäßrigen Lösung von Mangan(II)nitrat getränkt, die soviel Mangan enthält, daß der fertige Katalysator a) 2% Mangan und b) 8% Mangan enthält.

### Beispiel 3

Titandioxid-Pellets mit einem Reinheitsgrad von 98% und einem Sulfatgehalt von 0,5%, einem Durchmesser von 3 - 5 mm und einer spezifischen Oberfläche von 70 - 80 m²/g werden mit einer wäßrigen Lösung von Kobalt(II)nitrat getränkt, die soviel Kobalt enthält, daß der fertige Katalysator a) 2% Kobalt und b) 8% Kobalt enthält.

### Beispiel 4

Titandioxid-Pellets mit einem Reinheitsgrad von 98% und einem Sulfatgehalt von 0,5%, einem Durchmesser von 3 - 5 mm und einer spezifischen Oberfläche von 70 - 80 m²/g werden mit einer wäßrigen Lösung von Nickel(II)nitrat getränkt, die soviel Nickel enthält, daß der fertige Katalysator a) 2% Nickel und b) 8% Nickel enthält.

### Beispiel 5

Titandioxid-Pellets mit einem Reinheitsgrad von 98% und einem Sulfatgehalt von 0,5%, einem Durchmesser von 3 - 5 mm und einer spezifischen Oberfläche von 70 - 80 m²/g werden mit äquimolaren Lösungen der Nitrate von Kupfer(II) und Chrom (III) getränkt, die soviel Metall enthalten, daß der fertige Katalysator a) insgesamt 2% Metall und b) 8% Metall enthält.

### Beispiel 6

Titandioxid-Pellets mit einem Reinheitsgrad von 98% und einem Sulfatgehalt von 0,5%, einem Durchmessser von 3 - 5 mm und einer spezifischen Oberfläche von 70 - 80 m²/g werden mit äquimolaren Lösungen der Nitrate von Kupfer(II) und Mangan(II) getränkt, die soviel Metalle enthalten, daß der fertige Katalysator a) insgesamt 2% Metall und b) 8% Metall enthält.

### Beispiel 7

Titandioxid-Pellets mit einem Reinheitsgrad von 98% und einem Sulfatgehalt von 0,5%, einem Durchmessesr von 3 - 5 mm und einer spezifischen Oberfläche von 70 - 80 m²/g werden mit äquimolaren Lösungen der Nitrate von Kupfer(II) und Eisen(III) getränkt, die soviel Metalle enthalten, daß der fertige Katalysator a) insgesamt 2% Metall und b) 8% Metall enthält.

### Beispiel 8

Titandioxid-Pellets mit einem Reinheitsgrad von 98% und einem Sulfatgehalt von 0,5%, einem Durchmesser von 3 - 5 mm und einer spezifischen Oberfläche von 70 - 80 m²/g werden mit äquimolaren Lösungen der Nitrate von Kupfer(II) und Kobalt(II) getränkt, die soviel Metalle enthalten, daß der fertige Katalysator a) insgesamt 2% Metall und b) 8% Metall enthält.

### Beispiel 9

Titandioxid-Pellets mit einem Reinheitsgrad von 98% und einem Sulfatgehalt von 0,5%, einem Durchmesser von 3 - 5 mm und einer spezifischen Oberfläche von 70 - 80 m²/g werden mit äquimolaren Lösungen der Nitrate von Kupfer(II) und Nickel(II) getränkt, die soviel Metalle enthalten, daß der fertige Katalysator a) insgesamt 2% Metall und b) 8% Metall enthält.

Beispiele zur Durchführung des erfindungsgemäßen Verfahrens

### Beispiel 10

Die in den vorangegangenen Beispielen beschriebenen Katalysatoren wurden mit Gasmischungen erprobt, die jeweils 2000 ppm HKW (bezogen auf C₁) 2% Wasserdampf und getrocknete Luft als Rest enthielten. Bei einer Kontaktzeit von 1,5 sec. und einer Temperatur von 400°C wurden HKW-Restkonzentrationen < 1 ppm und eine CO₂-Konzentration von 2000 ppm gemessen. Folgende HKW wurden auf diese Weise untersucht:
CCl₂H₂, C₂Cl₃H₃, C₂Cl₄, C₆H₄Cl₂

### Beispiel 11

Die in den Beispielen 1 - 9 beschriebenen Katalysatoren wurden mit einem gasförmigen Gemisch aus einem CKW-Abfall-produkt mit der mittleren Zusammensetzung CH_{1,69}, Cl_{0,72}, O_{0,05} mit 3 Vol.-%, 20 Vol.-% Wasserdampf und Luft als Rest erprobt. Bei einer Kontaktzeit von 5 sec. und 400°C wurde eine CKW-Restkonzentration von <10 ppm Gesamtchlor festgestellt. Das Abgas enthielt weiterhin 3 Vol.-% CO₂ und 2,2 Vol.-% HCl.

## Patentansprüche

1. Verfahren zur Zersetzung organischer Halogenverbindungen in der Gasphase zu Kohlendioxid und Halogenwasserstoffen, indem ein Gasgemisch aus organischen Halogenverbindungen mit Wasserdampf und/oder Sauerstoff bei erhöhten temperaturen mit einer Katalysatormasse kontaktiert wird, dadurch gekennzeichnet, daß die Katalysatormasse Titandioxid mit einem Sulfatgehalt von 0,01 bis 10 Gewichtsprozent als Hauptbestandteil enthält und der mindestens ein Metalloxid aus der Gruppe Chrom, Mangan, Eisen, Kobalt und Nickel oder eine Kombination aus mindestens einem der vorgenannten Metalloxide mit Kupferoxid zugesetzt ist.

2. Katalysatormasse zur Durchführung des Verfahrens gemäß Anspruch 1, dadurch gekennzeichnet, daß die Katalysatormasse aus Titanoxid mit einem Sulfatgehalt von 0,01 bis 10 Gewichtsprozent und mindestens ein Metalloxid enthält, das aus der Gruppe Chrom, Mangan, Eisen, Kobalt und Nickel besteht oder eine Kombination aus mindestens einem der vorgenannten Metalloxide mit Kupferoxid enthält.

3. Katalysatormasse nach Anspruch 2, dadurch gekennzeichnet, daß der Metallgehalt 0,05 bis 20 Gewichtsprozent, vorzugsweise 0,3 bis 5 Gewichtsprozent beträgt, bezogen auf die fertige Katalysatormasse.

## Claims

1. A process for the decomposition of organic halogen compounds in the gaseous phase to form carbon dioxide and hydrogen halides, wherein a gaseous mixture of organic halogen compounds with water vapour and/or oxygen comes into contact at increased temperatures with a catalyst mass, **characterized in that** the catalyst mass contains titanium dioxide with a sulphate content of from 0·01 to 10% by weight as the main constituent, and at least one metallic oxide from the group of chromium, manganese, iron, cobalt and nickel or a combination of at least one of the aforesaid metallic oxides with copper oxide is added to the said catalyst mass.

2. A catalyst mass for performing the process according to Claim 1, **characterized in** **that** the catalyst mass [consists] of titanium oxide with a sulphate content of from 0**·**01 to 10% by weight and contains at least one metallic oxide consisting of the group of chromium, manganese, iron, cobalt and nickel or contains a combination of at least one of the aforesaid metallic oxides with copper oxide.

3. A catalyst mass according to Claim 2, **characterized in that** the metal content is from 0·05 to 20% by weight, preferably from 0·3 to 5% by weight, relative to the finished catalyst mass.

## Revendications

1. Procédé de décomposition de composés halogènés organiques, en phase gazeuse en dioxyde de carbone et hydrures d'halogène, selon lequel un mélange gazeux de composés organiques halogénés et de vapeur d'eau et/ou d'oxygène est mis en- contact à des températures élevées avec une masse catalytique, caractérisé en ce que la masse catalytique a pour composant principal du dioxyde de titane avec un pourcentage de 0,05 à 10 % en poids de sulfate, auquel est ajouté au moins un oxyde métallique du groupe du chrome, du manganèse, du fer, du cobalt et du nickel, ou une combinaison d'au moins un de ces oxydes métalliques avec de l'oxyde de cuivre.

2. Masse catalytique servant à la mise en oeuvre du procédé selon la revendication 1, caractérisée en ce que la masse catalytique contient du dioxyde de titane avec un pourcentage de 0,01 à 10 % en poids de sulfate et au moins un oxyde métallique du groupe du chrome, du manganèse, du fer, du cobalt et du nickel, ou une combinaison d'au moins un de ces oxydes métalliques avec de l'oxyde de cuivre.

3. Masse catalytique selon la revendication 2, caractérisée en ce que la teneur en métaux, rapportée au poids de la masse catalytique élaborée est comprise entre 0,05 et 20 %, de préférence entre 0,3 à 5 %.
